# EUROPÄISCHE PATENTSCHRIFT

(11) **EP 1 065 037 B1**
(45) Veröffentlichungstag und Bekanntmachung des Hinweises auf die Patenterteilung: **05.09.2007**
(21) Anmeldenummer: 00109728.6
(22) Anmeldetag: 08.05.2000
(51) Int. Cl.: B29C 45/73

(54) **Verfahren und Vorrichtung zum Beheizen von Spritzgiesswerkzeugen**
Process of and apparatus for heating of injection moulds
Procédé et dispositif pour le chauffage de moules d'injection

(30) Priorität: 29.06.1999 DE 19929731
(43) Veröffentlichungstag der Anmeldung: 03.01.2001
(73) Patentinhaber: z-werkzeugbau-gmbh, 6850 Dornbirn (AT)
(72) Erfinder: Dünser, Manfred, 6850 Dornbirn (DE)
(74) Vertreter: Schmidt-Evers, Jürgen

(56) Entgegenhaltungen:
- WO-A-96/29188
- DE-A- 2 815 146
- US-A- 4 298 324
- US-A- 4 481 159
- US-A- 5 234 637
- PATENT ABSTRACTS OF JAPAN vol. 012, no. 302 (M-732), 17. August 1988 (1988-08-17) & JP 63 078720 A (SEKISUI CHEM CO LTD), 8. April 1988 (1988-04-08)
- PATENT ABSTRACTS OF JAPAN vol. 015, no. 120 (M-1096), 25. März 1991 (1991-03-25) & JP 03 010811 A (ASAHI CHEM IND CO LTD), 18. Januar 1991 (1991-01-18)

## Beschreibung

Die Erfindung betrifft ein Verfahren zum Spritzgießen von Kunststoffteilen nach dem Oberbegriff des Anspruches 1 und einen Formeinsatz nach Anspruch 6.

Üblicherweise wird bei einem derartigen Verfahren ein Kunststoffgranulat verflüssigt und unter Druck in den Formhohlraum eines Formeinsatzes eingeführt bzw. eingespritzt. Der Formeinsatz besteht dabei in der Regel aus Metall (evtl. auch aus Keramik) und hat eine niedrigere Temperatur als die verflüssigte Kunststoffschmelze. Dementsprechend erkaltet die in den Formhohlraum eingespritzte Spritzgießmasse relativ schnell, wodurch innerhalb kurzer Zeit viele Teile in gleicher Form und mit reproduzierbarer Qualität hergestellt werden können.

Ein möglichst kühler Formeinsatz bietet auf der einen Seite den Vorteil, daß das Erkalten der Kunststoffschmelze sehr schnell erfolgt und damit die Produktionsgeschwindigkeit steigt. Auf der anderen Seite besteht allerdings auch die Gefahr, daß die Schmelze schon abkühlt und zähflüssig wird, bevor der gesamte Formhohlraum ausgefüllt wurde. Handelt es sich bei den herzustellenden Kunststoffteilen um sehr kleine Teile mit kompliziert gestalteten Formen, kann dies zu einem Funktionsverlust der Teile führen. Ein ähnliches Problem ergibt sich, wenn Kunststoffteile hergestellt werden sollen, bei denen aufgrund der Teilegeometrie der Formhohlraum nicht von einer Seite aus vollständig mit der Kunststoffschmelze gefüllt werden kann und daher an einigen Stellen zwei oder mehrere Schmelzflüsse aufeinandertreffen. An diesen Stellen entsteht eine Bindenaht, die eine Schwachstelle in der Stabilität des fertigen Kunststoffteils darstellt. Da derartige Nahtstellen in der Regel an von der Einspritzseite des Formeinsatzes entfernten Punkten entstehen, ist dort auch die Temperatur der Kunststoffschmelze bereits deutlich reduziert, so daß ein sicheres Verbinden der Schmelzflüsse erschwert wird.

Um die eben beschriebenen Probleme zu umgehen, werden bei einer in der DE 197 35 031 A1 beschriebenen Spritzgießvorrichtung in der Nähe kritischer Stellen Temperierelemente in dem Formeinsatz angeordnet. Bei diesen Temperierelementen handelt es sich beispielsweise um elektrische Heizpatronen, die in entsprechende Ausnehmungen oder Bohrungen des Formeinsatzes eingesteckt werden und diesen zumindest während der Einspritzphase beheizen. Ferner können neben den Heizpatronen auch Kühlelemente vorgesehen sein, die nach dem vollständigen Füllen des Formhohlraumes für ein beschleunigtes Abkühlen des Formeinsatzes und damit der Kunststoffschmelze sorgen. Um die Heizpatronen bzw. die Kühlelemente aufnehmen zu können, müssen die Formeinsätze allerdings eine gewisse Größe haben. Dabei können insbesondere in solchen Fällen, in denen miniaturisierte Spritzgießteile hergestellt werden sollen, Schwierigkeiten auftreten.

Die sich aus der Verwendung von speziellen Heizpatronen und Kühlelementen ergebenden Schwierigkeiten können entsprechend der WO 96/29188 A1 umgangen werden, indem die Formeinsätze direkt beheizt werden, was durch das Anlegen eines Heizstroms erfolgt. Die Formeinsätze bestehen dementsprechend aus einem elektrisch leitfähigen Material, wobei während des Einspritzens der Kunststoffschmelze ein Heizstrom durch den Formeinsatz geleitet wird, um diesen aufzuheizen. Eine vergleichbare Vorgehensweise ist auch aus der US 5,234,637 bekannt, welchen einen Formeinsatz zum Herstellen von PET-Flaschen beschreibt.

Der Erfindung liegt nunmehr die Aufgabe zugrunde, das aus der WO 96/29188 A1 oder der US 5,234,637 bekannte Verfahren zum Beheizen von Formeinsätzen für das Spritzgießen von Kunststoffteilen weiter zu verbessern.

Die Aufgabe wird durch ein Verfahren, welches die Merkmale des Anspruches 1 aufweist, gelöst. Entsprechend den aus dem Stand der Technik bekannten Verfahren ist vorgesehen, den zumindest teilweise aus elektrisch leitfähigem Material bestehenden Formeinsatz vor und/oder während des Einspritzens der Kunststoffschmelze durch das direkte Hindurchleiten eines Heizstroms zu erhitzen, wobei gemäß der vorliegenden Erfindung der Formeinsatz nunmehr allerdings derart ausgestaltet ist, daß er im Bereich des Formhohlraumes gegenüber einem Anschlußbereich zum Anlegen des Heizstromes eine reduzierte Querschnittfläche aufweist. Dieses Verfahren bietet die Möglichkeit, den Formeinsatz direkt und damit einfach, gleichmäßig und effektiv zu beheizen und die Heizleistung zu steuern, wobei aufgrund der erfindungsgemäßen Maßnahmen speziell in den die Kunststoffmasse umgebenden Bereichen hohe Stromdichten entstehen, so daß diese Bereiche besondere effektiv aufgeheizt werden können. Ein wesentlicher Vorteil der Erfindung ist darin zu sehen, daß Spritzgießwerkzeuge lokal auf etwa die Schmelztemperatur der Kunststoffschmelze aufgeheizt werden können und daher nach dem Einspritzvorgang rasch auf die Entformungstemperatur abkühlen bzw. abgekühlt werden können.

Weiterbildungen der Erfindung sind Gegenstand der Unteransprüche. Für das Erzeugen eines Heizstroms in dem Formeinsatz sind mehrere Möglichkeiten denkbar. Zum einen kann der Formeinsatz mit einer separaten Stromquelle verbunden werden, die eine ausreichend hohe Stromstärke erzeugt, um eine Widerstandserhitzung zu gewährleisten. Bei dieser Stromquelle kann es sich beispielsweise um einen Heiztransformator handeln, wobei sich der Formeinsatz in dem Stromkreis der Sekundärwicklung befindet.

Entsprechend einer Weiterbildung kann das Füllen des Formhohlraumes mit der Kunststoffschmelze dadurch unterstützt werden, daß im wesentlichen zeitgleich mit dem Einspritzen der Schmelze die Luft aus dem Formhohlraum abgesaugt wird. Dadurch wird das Entstehen von Luftblasen, die ein vollständiges Ausfüllen des Formhohlraums verhindern und damit zu Fehlern in den fertigen Kunststoffteilen führen könnten, unterdrückt. Ferner kann nach dem Füllen des Formhohlraumes mit der Schmelze der Formeinsatz aktiv gekühlt werden.

Die Erfindung soll im folgenden anhand der beiliegenden Zeichnung näher erläutert werden. Es zeigen:
- Fig. 1A: ein erstes Formeinsatzteil eines zweiteiligen Formeinsatzes;
- Fig. 1B: das erste Formeinsatzteil in Ansicht;
- Fig. 1C: das erste Formeinsatzteil im Schnitt I-I der Fig. 1A;
- Fig. 2A: das zu dem ersten Formeinsatzteil in Fig. 1A-C gehörige zweite Formeinsatzteil;
- Fig. 2B: das zweite Formeinsatzteil in Ansicht;
- Fig. 2C: das zweite Formeinsatzteil im Schnitt II-II der Fig. 2A;
- Fig. 3: eine Spritzgießvorrichtung im Schnitt IV-IV der Fig. 4;
- Fig. 4: den zu dem ersten Formeinsatzteil gehörigen Bereich der Spritzgießvorrichtung in Ansicht;
- Fig. 5: die Spritzgießvorrichtung im Schnitt V-V der Fig. 3;
- Fig. 6: die Spritzgießvorrichtung im Teilschnitt III-III der Fig. 4;
- Fig. 7: den Anschluß des zweiten Formeinsatzteils an einen Heiztransformator;
- Fig. 8: die mit dem Heiztransformator verbundene Spritzgießvorrichtung.

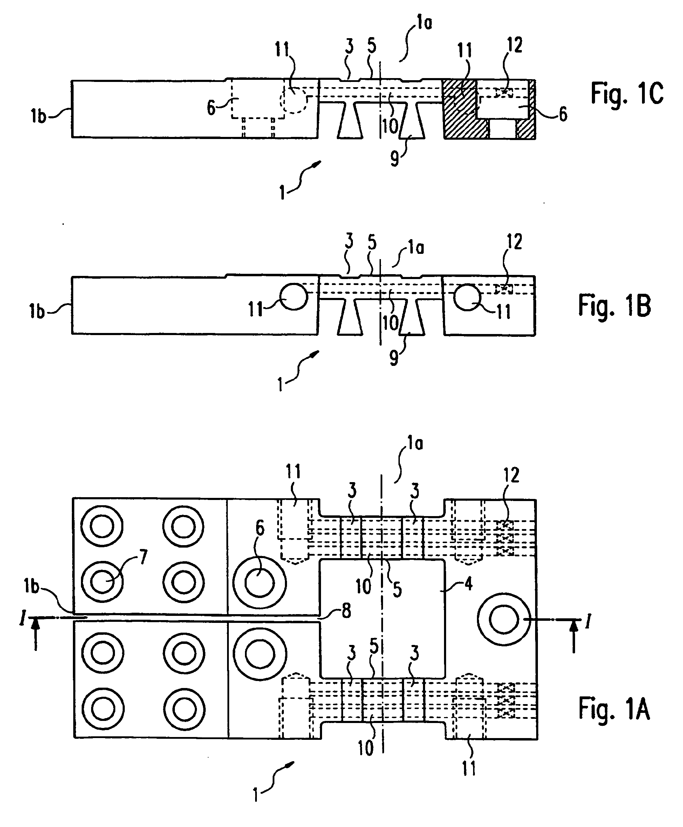

Mit dem im folgenden dargestellten Formeinsatz bzw. der dazugehörigen Spritzgießvorrichtung sollen rechteckige Kunststoffplättchen mit sehr geringer Höhe bzw. Dicke hergestellt werden. Der Formeinsatz besteht in diesem Ausführungsbeispiel aus zwei Teilen - einem ersten Formeinsatzteil 1 und einem zweiten Formeinsatzteil 2 - die im zusammengesetzten Zustand den Formeinsatz mit dem Formhohlraum bilden. Das in den Fig. 1A bis 1C gezeigte erste Formeinsatzteil 1 besteht vollständig aus Metall und weist einen Formhohlraumbereich 1a sowie einen gegenüberliegenden Anschlußbereich 1b auf. Der Formhohlraumbereich 1a weist eine rechteckige Öffnung 4 zur Aufnahme eines zentralen Verteilelementes auf, mit dessen Hilfe die Kunststoffschmelze in die einzelnen Zellen des Formhohlraumes verteilt wird. An zwei Seiten dieser rechteckigen Öffnung 4 befindet sich in dem ersten Formeinsatzteil 1 jeweils ein Brückenbereich 5, wobei jeder Brückenbereich 5 an seiner Oberseite zwei rechteckige Ausnehmungen 3 aufweist, die im zusammengesetzten Zustand des Formeinsatzes die einzelnen Zellen des Formhohlraums bilden, in denen jeweils ein Kunststoffplättchen hergestellt wird. Ferner sind in dem Formhohlraumbereich 1a drei Bohrungen 6 zur Aufnahme von Befestigungsschrauben vorgesehen, mit denen das erste Formeinsatzteil 1 in der Spritzgießvorrichtung fixiert werden kann.

Der Anschlußbereich 1b sowie der an diesen angrenzende Bereich des Formhohlraumbereiches 1a sind durch einen entlang der Längsachse I-I verlaufenden Spalt 8 in zwei Hälften getrennt. Die beiden Hälften des Anschlußbereiches 1b können daher als elektrische Anschlüsse verwendet werden, wobei durch Anschluß dieser beiden Hälften an eine Stromquelle ein Stromfluß durch das erste Formeinsatzteil 1 und insbesondere durch die beiden Brückenbereiche 5 erzeugt werden. Zur sicheren Verbindung des ersten Formeinsatzteils 1 mit einer Stromquelle sind in dem Anschlußbereich 1b mehrere Bohrungen 7 zur Aufnahme von Verbindungsschrauben angeordnet.

Die beiden Brückenbereiche 5 weisen gegenüber den beiden Hälften des Anschlußbereiches 1b eine deutlich reduzierte Querschnittsfläche auf. Dies hat zur Folge, daß beim Fließen eines Heizstroms durch das erste Formeinsatzteil 1 in den Brückenbereichen 5 besonders hohe Stromdichten entstehen. Die an die vier Ausnehmungen 3 angrenzenden Bereiche des Formeinsatzes können daher besonders effektiv erhitzt werden. Da die beiden Brückenbereiche 5 während des Einfüllens der Kunststoffschmelze einem nicht zu vernachlässigendem Druck ausgesetzt sind, sind zur Erhöhung der Stabilität an ihrer Unterseite jeweils zwei Stützpfeiler 9 vorgesehen.

Die Querschnittsfläche der Brückenelemente 5 wird zusätzlich durch drei parallel verlaufende Längsbohrungen 10 reduziert, die jeweils zur offenen Seite hin mit Verschlüssen 12 abgeschlossen sind, wobei diese Längsbohrungen 10 zwei links und rechts von den Brückenbereichen 5 angebrachte Querbohrungen 11 miteinander verbinden. Es ergibt sich damit ein Leitungssystem, durch das nach dem vollständigen Füllen des Formhohlraumes mit Kunststoffschmelze ein Kühlungsmittel geleitet werden kann, um ein beschleunigtes Abkühlen des Formeinsatzes und damit der Kunststoffschmelze zu erzielen. Dabei kann es sich bei dem Kühlungsmittel um Luft, Wasser oder auch andere bekannte Kühlflüssigkeiten und Kühlgase handeln. Es wäre allerdings auch denkbar, auf das Leitungssystem und das Hindurchleiten eines Kühlmittels zu verzichten und statt dessen - wie in der DE 197 35 031 A1 beschrieben-Kühlelemente in dem Formeinsatz anzubringen. Ferner wäre das Anbringen von Temperatursensoren in zusätzlichen Bohrungen innerhalb oder in der Nähe der Brückenbereiche 5 denkbar, mit denen das Beheizen und/oder das Abkühlen des Formeinsatzes überwacht werden kann, wobei dann dementsprechend die Heiz- und/oder Kühlleistung reguliert werden könnte.

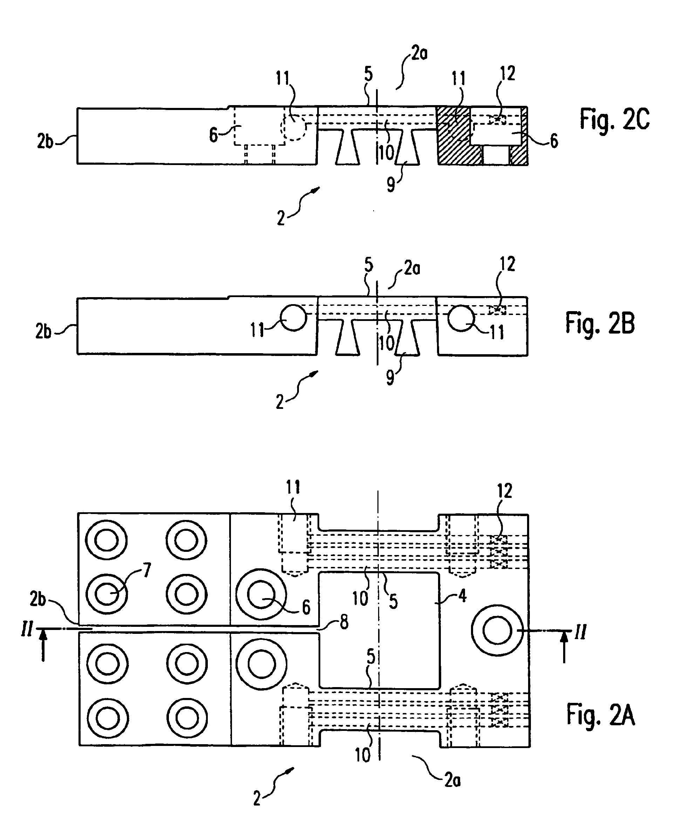

Das in den Fig. 2A bis 2C (gleiche Bauteile wurden hier mit den gleichen Bezugszeichen versehen) dargestellte zweite Formeinsatzteil 2 entspricht in seinem Aufbau im wesentlichen dem ersten Formeinsatzteil 1. Lediglich die vier Ausnehmungen 3 sind bei dem zweiten Formeinsatzteil 2 nicht vorhanden, so daß die beiden Brückenbereiche 5 an der Oberseite nun glatte Oberflächen aufweisen. Werden das erste Formeinsatzteil 1 und das zweite Formeinsatzteil 2 jeweils mit ihren Oberseiten aneinandergefügt, so bilden die beiden Oberseiten der Brückenbereiche 5 vier kastenförmige Hohlräume oder Kavitäten, welche die Form der herzustellenden Kunststoffplättchen definieren. Die Tiefe der Ausnehmungen 3 in den Brückenbereichen 5 des ersten Formeinsatzteils 1 bestimmt daher die Dicke der fertigen Kunststoffplättchen, wobei mit dem dargestellten Formeinsatz Plättchendicken im Bereich von 0,01mm erreicht werden können.

Die Oberseiten der beiden Formhohlraumbereiche 1a und 2a sind gegenüber den Oberseiten der Anschlußbereiche 1b und 2b ein wenig erhöht, so daß beim Zusammenfügen des ersten Formeinsatzteils 1 mit dem zweiten Formeinsatzteil 2 nur die Formhohlraumbereiche 1a und 2a in Anlage kommen. Beim Anschluß der beiden Formeinsatzteile 1 und 2 an eine externe Stromquelle muß darauf geachtet werden, daß die beiden gegenüberliegenden Hälften der Anschlußbereiche 1b und 2b jeweils auf dem gleichem Potential liegen, so daß ein Kurzschluß vermieden und ein gleichgerichteter Heizstromfluß durch den Formeinsatz erzielt wird.

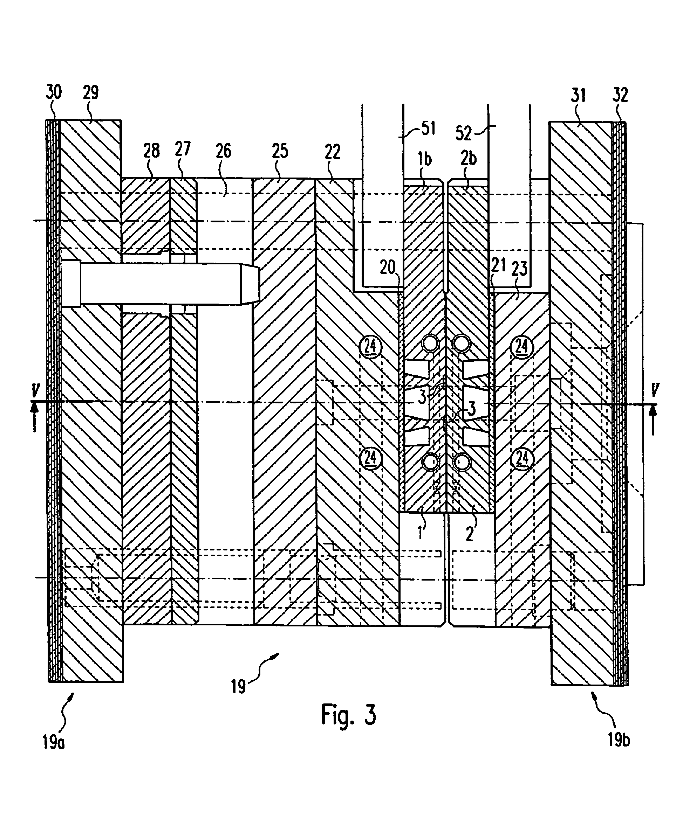

Anhand der folgenden Figuren soll nun die konkrete Ausgestaltung einer Spritzgießvorrichtung 19 sowie die Anordnung der beiden Formeinsatzteile 1 und 2 darin beschrieben werden. Fig. 3 zeigt eine derartige Spritzgießvorrichtung 19 im Schnitt. Sowohl das erste Formeinsatzteil 1 als auch das zweite Formeinsatzteil 2 sind jeweils fest mit einem ersten Teil 19a bzw. einem zweiten Teil 19b der Spritzgießvorrichtung 19 verbunden, wobei ein Zusammenschluß bzw. Zentrieren der beiden Teile 19a und 19b über schematisch angedeutete Führungssäulen und Führungsbuchsen erfolgt. Nach dem Erkalten der Kunststoffschmelze können die beiden Teile 19a und 19b voneinander entfernt werden und das fertige Kunststoffteil ausgestoßen bzw. entnommen werden.

Das erste Formeinsatzteil 1 ist mit einer ersten Formrahmenplatte 22 verbunden, wobei sich zwischen dem ersten Formeinsatzteil 1 und der ersten Formrahmenplatte 22 eine isolierende Abstützplatte 20 befindet. In gleicher Weise ist eine weitere isolierende Abstützplatte 21 zwischen dem zweiten Formeinsatzteil 2 und einer mit diesem verbundenen zweiten Formrahmenplatte 23 angeordnet. Vorzugsweise bestehen die beiden Abstützplatten 20 und 21 aus Keramik. Die elektrische Isolierung des Formeinsatzes gegenüber den anderen Komponenten der Spritzgießvorrichtung 19 ist notwendig um einen kontrollierten Fluß des Heizstromes durch die beiden Formeinsatzteile 1 und 2 zu gewährleisten. Die beiden Formrahmenplatten 22 und 23 weisen schleifenförmige Kühlleitungen 24 auf, durch die beispielsweise Wasser oder ein anderes Kühlmittel geleitet werden kann.

Die zweite Formrahmenplatte 22 befindet sich neben einer Druckplatte 25, die wiederum durch einen Hohlraum 26 beabstandet neben einer Auswerferhalteplatte 27 liegt. Diese Auswerferhalteplatte 27 grenzt an eine Auswerferdruckplatte 28 und ist in dem Hohlraum 26 bewegbar, wobei mit ihrer Hilfe nach dem Erkalten der Kunststoffschmelze ein Auswurfmechanismus betätigt werden kann. Die soeben beschriebene Anordnung (erstes Formeinsatzteil 1, Abstützplatte 20, erste Formrahmenplatte 22, Druckplatte 25, Hohlraum 26, Auswerferhalteplatte 27 und Auswerferdruckplatte 28) ist auf einer ersten Aufspannplatte 29 montiert, an deren gegenüberliegenden Seite sich eine weitere Isolierplatte 30 zur thermischen Isolierung der Vorrichtung gegenüber der Umgebung befindet. Das zweite Formeinsatzteil 2, die zweite isolierende Abstützplatte 21 und die zweite Formrahmenplatte 23 sind an einer zweiten Aufspannplatte 31 befestigt, die ebenfalls an eine weitere Isolierplatte 32 angrenzt. Die Anschlußbereiche 1b und 2b der beiden Formeinsatzteile 1 und 2 sind schließlich mit Hilfe der zuvor erwähnten Verbindungsschrauben mit Leiterbrücken 51 und 52 verbunden, die zu einer separaten Heizstromquelle führen.

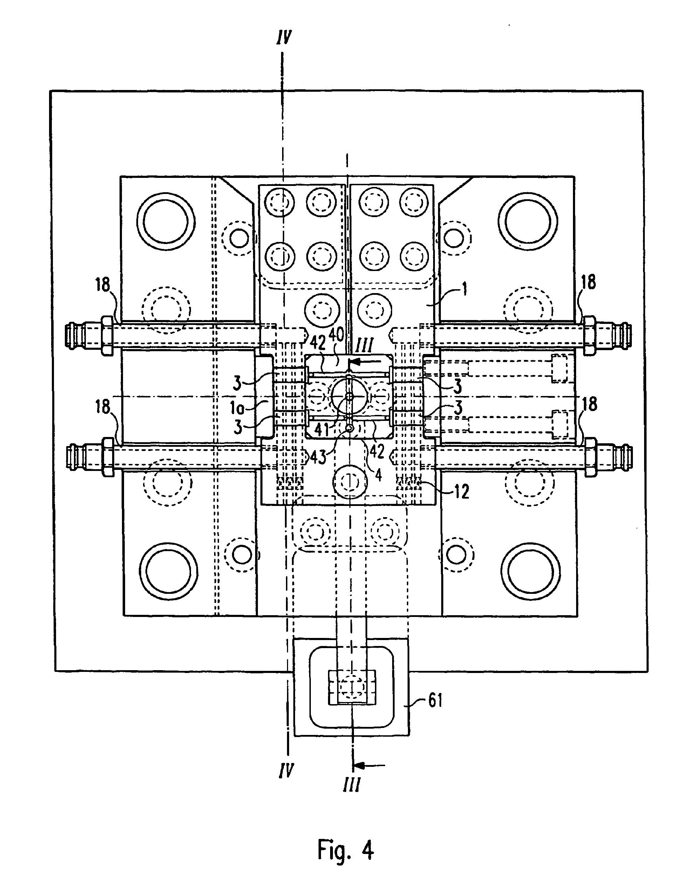

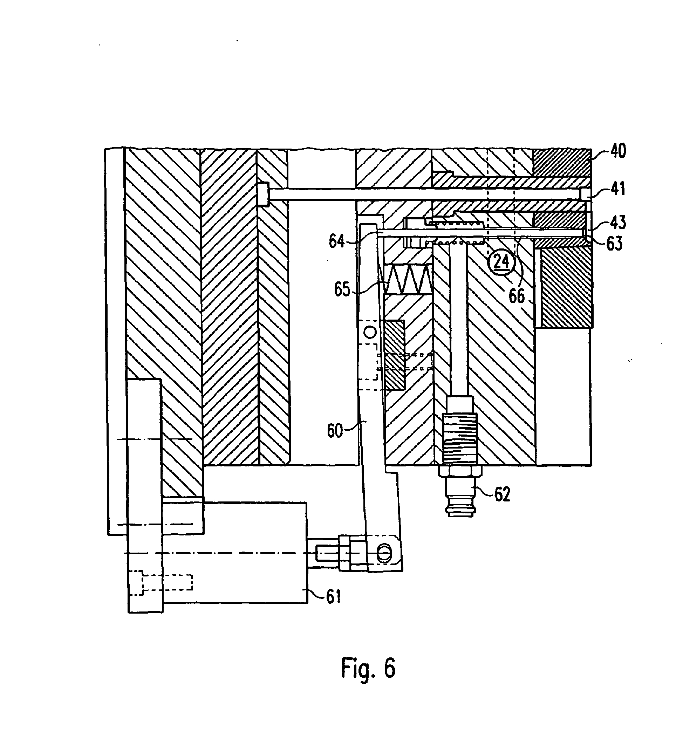

Fig. 4 zeigt die Anordnung des ersten Formeinsatzteils 1 in dem ersten Teil 19a der Spritzgießvorrichtung 19 in Ansicht. Kühlluftleitungen 18, welche mit einer separaten (nicht dargestellten) Kühlluftpumpe verbunden sind, führen jeweils zu den Querbohrungen 11 in dem ersten Formeinsatzteil 1, so daß eine aktive Kühlung des Formhohlraumbereiches 1a erzielt werden kann. In der rechteckigen Öffnung 4 des ersten Formeinsatzteils 1 ist ein Verteilelement 40 angeordnet. Von einer Zentralbohrung 41 ausgehend verzweigen an der Oberseite dieses Verteilelementes 40 Verteilerkanäle 42 zu den rechteckigen Ausnehmung 3 in den Brückenbereichen 5. In dem Kanalsystem befindet sich ferner die Absaugöffnung 43 einer Luftabsaugvorrichtung, die unter anderem eine Luftabsaugleitung, ein Ventil und einen Luftzylinder 61 aufweist. Die in Fig. 6 ausführlicher dargestellte Luftabsaugvorrichtung dient dazu, während des Einfüllens der Kunststoffschmelze die Luft aus dem Formhohlraum abzusaugen und damit das Entstehen von Luftblasen und Hohlräumen in den fertigen Kunststoffteilen zu verhindern. Auch das Verteilelement 40 besteht aus einem nichtleitenden Material, beispielsweise aus Keramik oder aus einer nichtleitenden Beschichtung, um den Heizstromfluß in den Formeinsatzteilen 1 und 2 nicht zu beeinflussen.

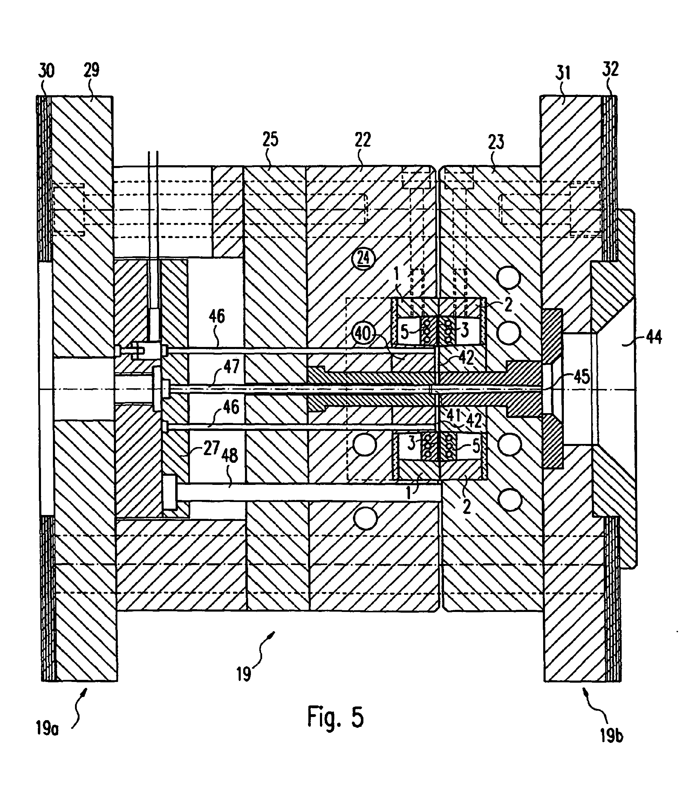

Das Einspritzen der Kunststoffschmelze in den Formhohlraum des Formeinsatzes soll nun anhand Fig. 5 erläutert werden. Die Kunststoffschmelze wird von einer (nicht dargestellten) Kunststoff-Einspritzeinheit über eine trichterförmige Öffnung 44 an der Oberseite des zweiten Teils 19b der Spritzgießvorrichtung 19 in einen horizontal verlaufenden Zentralkanal 45 eingespritzt. Die Zentralbohrung 41 des Verteilelementes 40 stellt das andere Ende dieses Zentralkanals 45 dar. Die von der Einspritzeinheit zugeführte Kunststoffschmelze gelangt dann über die Verteilerkanäle 42 in die durch die Ausnehmungen 3 gebildeten kastenförmigen Hohlräume oder Zellen. Vor und/oder während des Einspritzens der Kunststoffschmelze wird nun ein Heizstrom durch die beiden Formeinsatzteile 1 und 2 geführt, so daß die insgesamt vier Brückenbereiche 5 derart geheizt werden, daß die Kunststoffschmelze auch noch beim Einströmen in die extrem schmalen Hohlräume für die Kunststoffplättchen ausreichend flüssig ist. Sind die Hohlräume schließlich gefüllt, kann der Heizstrom gestoppt werden und mit einer aktiven Kühlung des Formeinsatzes begonnen werden.

Fig. 5 zeigt ferner den Auswurfmechanismus, mit dem nach dem Erstarren der Kunststoffschmelze und dem Abnehmen des zweiten Teils 19b der Spritzgießvorrichtung 19 das fertige Kunststoffteil ausgestoßen werden kann. Wesentliches Element dieses Auswurfmechanismus ist die Auswerferhalteplatte 27, die mit mehreren Auswerferstiften 46 und 47 verbunden ist. Die Auswerferstifte 46 führen jeweils zur Unterseite eines der Verteilerkanäle 42, während der Stab 47 das Ende der Zentralbohrung 41 darstellt. Die Auswerferstifte 46 und 47 schließen dabei die Verteilerkanäle 42 bzw. die Zentralbohrung 41 formschlüssig ab. Zum Auswerfen des fertigen Kunststoffteiles werden die Auswerferhalteplatte 27 und damit die Auswerferstifte 46 und 47 beispielsweise hydraulisch oder durch einen Auswerferstößel betätigt und damit die in den Verteilerkanälen 42 entstandenen Kunststoffstege sowie der in der Zentralbohrung 41 entstandene Kunststoffpfropfen abgestoßen. Aufgrund der vertikalen Stellung der beiden Formeinsatzteile 1 und 2 fällt das fertige Kunststoffteil dann einfach aus der Spritzgießvorrichtung 19 heraus. Alternativ dazu kann das fertige Kunststoffteil auch durch ein Handling-System entnommen werden. Beim anschließenden Zusammenfügen der Spritzgießvorrichtung 19 wird ein ebenfalls mit der Auswerferhalteplatte 27 verbundener Rückstoßbolzen 48 wieder zurückgedrückt, wodurch die Auswerferhalteplatte 27 und die Auswerferstifte 46, 47 wieder automatisch in ihre Ausgangsposition zurückbewegt werden.

Das Einspritzen der Kunststoffschmelze in den Formhohlraum erfolgt vorzugsweise unter Druck, um das Ausbreiten der Schmelze in den engen Hohlräumen zusätzlich zu unterstützen. Dabei kann es jedoch zu Luftblasen in dem Formhohlraum kommen, die ein weiteres Ausfüllen des Hohlraums verhindern oder zu Fehlern in den fertigen Kunststoffteilen führen können. Aus diesem Grund kann unmittelbar vor und während dem Einspritzen mit der in Fig. 6 dargestellten Luftabsaugvorrichtung die Luft aus dem Formhohlraum und aus den Verteilerkanälen 42 des Verteilelementes 40 abgesaugt werden. In dem Kanalsystem an der Oberseite des Verteilelements 40 besteht eine Verbindung zwischen der Zentralbohrung 41 und der Absaugöffnung 43. In dieser Absaugöffnung 43 befindet sich ein Ventil 63, das über einen Ventilstößel 64 mit einer Wippe 60 verbunden ist, die von dem Luftzylinder 61 betätigt werden kann. Dabei wird die Wippe durch einen Federmechanismus 65 in einer das Ventil 63 schließenden Stellung vorgespannt. Soll Luft aus dem Formhohlraum abgesaugt werden, wird die Wippe 60 durch den Luftzylinder 61 betätigt, der Ventilstößel 64 angehoben und damit das Ventil 63 geöffnet. Über die zylindrische Bohrung 66, in der sich der Ventilstößel 64 befindet, sowie die Luftabsaugleitung 62 kann dann mit Hilfe einer externen Pumpe die Luft abgesaugt werden. Gleichzeitig schließt das Ventil 63 automatisch, falls die Wippe 60 nicht mehr durch den Luftzylinder 61 betätigt wird oder falls von der anderen Seite Kraft auf den Ventilstößel 64 ausgeübt wird. Auf diese Weise wird verhindert, daß die Kunststoffschmelze in die zylindrische Bohrung 66 eindringen und diese möglicherweise verstopfen kann.

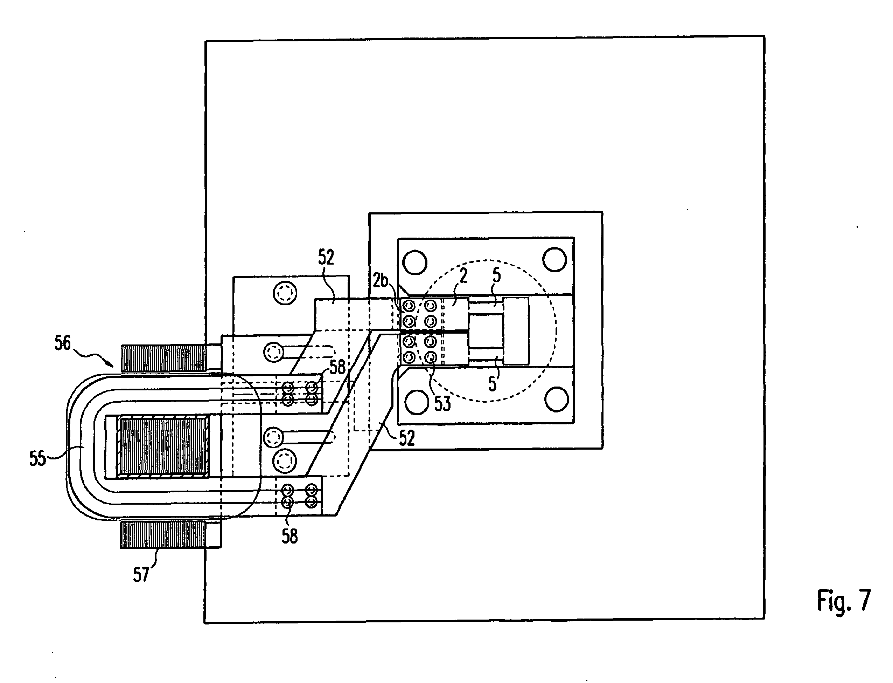

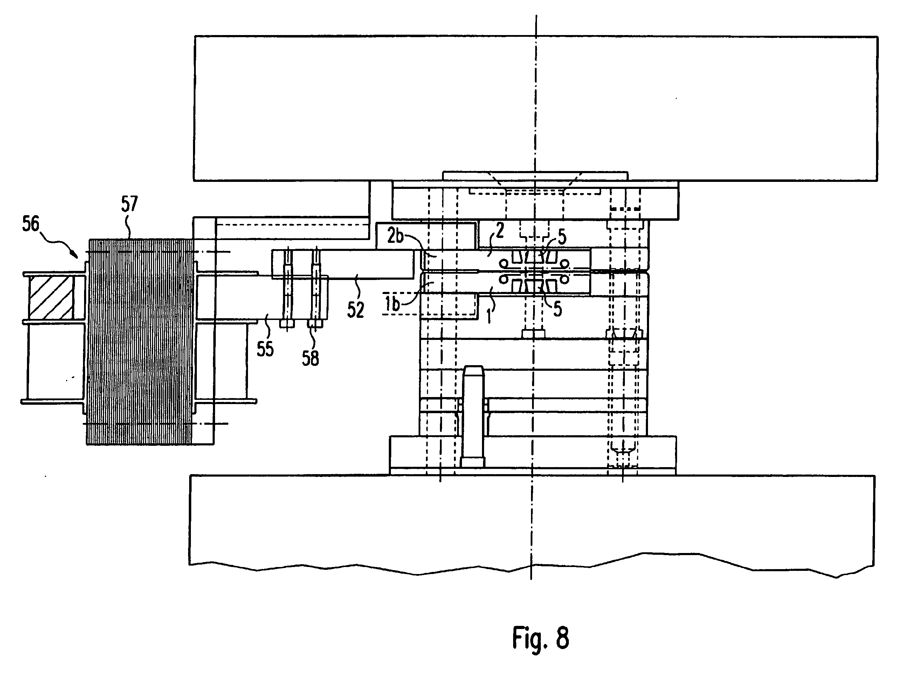

Anhand der folgenden beiden Figuren 7 und 8 soll nun das Erzeugen eines Heizstroms in den Formeinsatzteilen 1 und 2 erläutert werden. Fig. 7 zeigt die Verbindung des zweiten Formeinsatzteils 2 mit einem Heiztransformator 56. Dabei sind die beiden - durch den Spalt 8 getrennten - Hälften des Anschlußbereichs 2b des zweiten Formeinsatzteils 2 mit Hilfe von Verbindungsschrauben 53 jeweils mit dem Ende einer Leiterbrücke 52 verbunden, wobei die beiden Leiterbrücken 52 an ihrem anderen Ende über weitere Verbindungsschrauben 58 mit den beiden Enden eines U-förmigen Leiterstücks 55 verbunden sind. Dieses U-förmige Leiterstück 55 stellt die einzige Sekundärwicklung des Heiztransformators 56 dar. Da die Primärspule 57 eine wesentlich höhere Windungszahl aufweist, wird der Strom in dem Heizkreis der Sekundärwicklung bzw. des U-förmigen Leiterstücks und damit in dem zweiten Formeinsatzteil 2 stark nach oben transformiert. Zusätzlich wird in den beiden Brückenbereichen 5 nochmals eine deutlich Erhöhung der Stromdichte erzielt, da diese gegenüber den restlichen Leiterbereichen des sekundären Heizkreises einen deutlich reduzierten Querschnitt aufweisen. Aufgrund der Ausgestaltung mit reduzierten Leiterquerschnitten in den kritischen (d.h. in den zu beheizenden) Bereichen kann daher schon bei Stromstärken, die in den nicht zu beheizenden Bereichen und in den Stromzuführungen kein Erwärmung verursachen, eine ausreichende Widerstandserhitzung erzielt werden. Die Verbindung des zweiten Formeinsatzteils 2 mit der Sekundärwicklung des Heiztransformators 56 ist nochmals in seitlicher Ansicht in Fig. 8 dargestellt. Nicht gezeigt ist hier ein zweiter Heiztransformator, der in gleicher Weise mit dem ersten Formeinsatzteil 1 verbunden ist. Beim Betrachten von Fig. 8 wird ferner deutlich, daß beim Anschließen der beiden Formeinsatzteile 1 und 2 an die beiden Heiztransformatoren auf eine richtige Polung der Anschlüsse geachtet werden muß. Ein vollständiger Heizstromfluß durch die gesamten Formeinsatzteile 1 und 2 und insbesondere durch die Brückenbereiche 5 wird nur dann erreicht, wenn die sich gegenüberliegenden Anschlußbereiche 1b und 2b jeweils die gleiche Polung aufweisen.

Bei allen hier vorgeschlagenen Verfahren ergibt sich der wesentliche Vorteil, daß der Formeinsatz durch Erzeugen eines Heizstromes direkt beheizt wird, und nicht indirekt - beispielsweise durch die Verwendung von Heizpatronen oder anderen Heizelementen - erwärmt werden muß. Aufgrund dessen wird eine wesentlich effektivere und gut steuerbare Beheizung der gewünschten Stellen erzielt, was zum einen das Produktionsverfahren zur Herstellung von Spritzgießteilen beschleunigt und zum anderen auch die Herstellung von sehr komplizierten Strukturen mit minimalen Detailausprägungen und/oder Wandstärken bis in den Mikrometerbereich ermöglicht. Dabei ist das Verfahren nicht auf die Verwendung von zweiteiligen Formeinsätzen beschränkt. Selbstverständlich sind je nach Struktur des herzustellenden Kunststoffteiles auch einteilige oder mehrteilige Formeinsätze denkbar, wobei es möglich wäre, nur die unmittelbar in der Nähe von engen Hohlräumen liegenden Bereiche des Formeinsatzes aus leitfähigem Material zu fertigen und wie eben beschrieben zu beheizen, während der restliche Formeinsatz beispielsweise aus Keramik besteht.

## Patentansprüche

1. Verfahren zum Spritzgießen von Kunststoffteilen mit folgenden Schritten:
a) Einspritzen einer ausreichenden Menge Kunststoffschmelze in einen Formhohlraum eines Formeinsatzes (1, 2);
b) Erkaltenlassen der Kunststoffschmelze in dem Formhohlraum; und
c) Entfernen des erkalteten Kunststoffteiles aus dem Formeinsatz (1, 2),
wobei der Formeinsatz (1, 2) zumindest vor und/oder während des Einspritzens der Kunststoffschmelze durch einen Heizstrom erhitzt wird, der direkt durch den zumindest teilweise aus elektrisch leitfähigem Material bestehenden Formeinsatz (1, 2) hindurchgeleitet wird,
**dadurch gekennzeichnet,**
**daß** der Formeinsatz (1, 2) im Bereich (5) des Formhohlraumes gegenüber einem Anschlußbereich (1b, 2b) des Formeinsatzes (1, 2) zum Anlegen des Heizstromes eine reduzierte Querschnittfläche aufweist, so dass im Bereich des Formhohlraumes gegenüber dem Anschlußbereich (1b, 2b) eine Erhöhung der Stromdichte erzielt wird.

2. Verfahren nach Anspruch 1,
**dadurch gekennzeichnet,**
**daß** der Formeinsatz (1, 2) mit einer separaten Stromquelle (56) verbunden wird.

3. Verfahren nach Anspruch 2,
**dadurch gekennzeichnet,**
**daß** die separate Stromquelle ein Heiztransformator (56) ist.

4. Verfahren nach einem der Ansprüche 1 bis 3,
**dadurch gekennzeichnet,**
**daß** zum Beschleunigen des Erkaltenlassens der Kunststoffschmelze der Formeinsatz (1, 2) nach dem Einspritzen der Kunststoffschmelze gekühlt wird.

5. Verfahren nach einem der Ansprüche 1 bis 4,
**dadurch gekennzeichnet,**
**daß** im wesentlichen zeitgleich mit dem Einspritzen der Kunststoffschmelze Luft aus dem Formhohlraum abgesaugt wird.

6. Formeinsatz aus elektrisch leitfähigem Material, welcher einen Formhohlraum zum Einführen von Spritzgießschmelze bildet,
wobei der Formeinsatz (1, 2) Mittel (1b, 2b, 8) zum direkten Hindurchführen eines Heizstromes durch den Formeinsatz (1, 2) aufweist,
**dadurch gekennzeichnet,**
**daß** der Formeinsatz (1, 2) zur Erhöhung der Stromdichte im Bereich (5) des Formhohlraumes gegenüber einem Anschlußbereich (1b, 2b) des Formeinsatzes (1, 2) zum Anlegen des Heizstromes eine reduzierte Querschnittfläche aufweist, so dass im Bereich des Formhohlraumes gegenüber dem Anschlußbereich (1b, 2b) eine Erhöhung der Stromdichte erzielt werden kann.

7. Formeinsatz nach Anspruch 6.
**dadurch gekennzeichnet,**
**daß** die Mittel zum Hindurchführen des Heizstromes elektrische Anschlüsse sind.

8. Formeinsatz nach Anspruch 6 oder 7,
**dadurch gekennzeichnet,**
**daß** dieser aus zumindest zwei Formeinsatzteilen (1, 2) gebildet wird, die im zusammengefügten Zustand den Formhohlraum bilden.

9. Formeinsatz nach einem der Ansprüche 6 bis 8,
**dadurch gekennzeichnet,**
**daß** der Formeinsatz (1, 2) Öffnungen (10, 11) zum Hindurchleiten eines Kühlmediums aufweist.

10. Vorrichtung zum Spritzgießen von Kunststoffteilen mit
einem Formeinsatz (1, 2), der einen Formhohlraum bildet, und
einer Kunststoff-Einspritzeinheit zum Einspritzen einer Kunststoffschmelze in dem Formhohlraum,
wobei die Vorrichtung Mittel zum Anlegen eines Heizstromes in dem zumindest teilweise aus leitfähigem Material bestehenden Formeinsatz (1, 2) aufweist,
**dadurch gekennzeichnet.**
**daß** der Formeinsatz (1, 2) gemäß einem der Ansprüche 6 bis 9 ausgebildet ist.

11. Vorrichtung nach Anspruch 10,
**dadurch gekennzeichnet,**
**daß** die Vorrichtung einen Heiztransformator (56) aufweist, dessen Sekundärwicklung (55) mit dem Formeinsatz (1, 2) verbunden ist und mit diesem einen Heizstromkreis bildet.

12. Vorrichtung nach Anspruch 10 oder 11,
**dadurch gekennzeichnet,**
**daß** die Vorrichtung eine Luftabsaugvorrichtung (62, 63) zum Absaugen der Luft aus dem Formhohlraum aufweist.

## Claims

1. Method for the injection molding of plastic parts with the following steps:
a) injection of a sufficient quantity of plastic melt into a mold chamber of a mold form (1, 2);
b) allowing the plastic melt to cool in the mold chamber; and
c) removal of the cooled plastic part from the mold form,
wherein the mold form (1,2), at least before and/or during the injection of the plastic melt, is heated by a heating current which is passed directly through the mold form (1, 2) at least partly consisting of electrically conductive material,
**characterized in that**,
for applying the heating current the mold form (1, 2) has in the region (5) of the mold chamber opposite a connection region (1b, 2b) a reduced cross-sectional area, so that an increase of the current density is obtained in the region of the mold chamber opposite the connection region (1b, 2b).

2. Method according to claim 1, **characterized in that** the mold form (1, 2) is connected with a separate current source (56).

3. Method according to claim 2, **characterized in that** the separate current source is a heating transformer (56).

4. Method according to any of claims 1 to 3,
**characterized in that** for accelerating the allowing to cool of the plastic melt, the mold form (1,2) is cooled after the injection of the plastic melt.

5. Method according to any of claims 1 to 4,
**characterized in that** air is sucked out of the mold chamber substantially at the same time as the injection of the plastic melt.

6. Mold form of electrically conductive material, which provides a mold chamber for the introduction of injection molding melt,
wherein the mold form (1, 2) has means (1b, 2b, 8) for direct passing of a heating current through the mold form (1,2),
**characterized in that**,
for increasing the current density in the region (5) of the mold chamber opposite a connection region (1b, 2b) of the mold form (1, 2), the mold form (1, 2) has a reduced cross-sectional area for applying the heating current, so that an increase of the current density can be attained in the region of the mold chamber opposite the connection region (1b, 2b).

7. Mold form according to claim 6, **characterized in that** the means for passing through the heating current are electrical connections.

8. Mold form according to claim 6 or 7, **characterized in that** this mold form is constituted of at least two mold form parts (1, 2) which in the assembled condition form the mold chamber.

9. Mold form according to any of claims 6 to 8,
**characterized in that** the mold form (1, 2) has openings (10, 11) for the passing through of a cooling medium.

10. Device for the injection molding of plastic parts having
a mold form (1, 2) which forms a mold chamber, and
a plastic injection molding unit for injecting a plastic melt into the mold chamber,
wherein the device has means for applying a heating current to the mold form (1,2) which at least partly consists of conductive material,
**characterized in that** the mold form (1,2) is constituted in accordance any of claims 6 to 9.

11. Device according to claim 10, **characterized in that** the device shows has a heating transformer (56) the secondary winding (55) of which is connected to the mold form (1, 2) and forms with this a heating current circuit.

12. Device according to claim 10 or 11, **characterized in that**, for sucking the air from the mold chamber, the device has an air suction device (62, 63).

## Revendications

1. Procédé de moulage par injection de pièces en matière plastique comprenant les étapes suivantes :
a) injection d'une quantité suffisante de fonte de matière plastique dans une empreinte d'une partie rapportée de moule (1, 2) ;
b) refroidissement de la fonte de matière plastique dans l'empreinte ; et
c) retrait de la pièce en matière plastique refroidie de la partie rapportée de moule (1, 2),
la partie rapportée de moule (1, 2) étant chauffée au moins avant et/ou pendant l'injection de la fonte de matière plastique par un courant de chauffage qui est dirigé directement à travers la partie rapportée de moule (1, 2) formée au moins partiellement de matériau électriquement conducteur,
**caractérisé en ce que**
la partie rapportée (1, 2) présente, dans la zone (5) de l'empreinte par rapport à une zone de raccordement (1b, 2b) de la partie rapportée de moule (1, 2) pour appliquer le courant de chauffage, une surface de section transversale réduite, de sorte que, dans la zone de l'empreinte par rapport à la zone de raccordement (1b, 2b), une augmentation de la densité de courant est obtenue.

2. Procédé selon la revendication 1,
**caractérisé en ce que**
la partie rapportée de moule (1, 2) est reliée à une source de courant séparée (56).

3. Procédé selon la revendication 2,
**caractérisé en ce que**
la source de courant séparée est un transformateur de chauffage (56).

4. Procédé selon l'une des revendications 1 à 3,
**caractérisé en ce que**
pour accélérer le refroidissement de la fonte de matière plastique, la partie rapportée de moule (1, 2) est refroidie après l'injection de la fonte de matière plastique.

5. Procédé selon l'une des revendications 1 à 4,
**caractérisé en ce que**
sensiblement simultanément à l'injection de fonte de matière plastique, de l'air est aspiré de l'empreinte.

6. Partie rapportée de moule en matériau électriquement conducteur, qui forme une empreinte pour introduire la fonte de moulage par injection,
la partie rapportée de moule (1, 2) comprenant des moyens (1b, 2b, 8) destinés à transporter directement un courant de chauffage à travers la partie rapportée de moule (1, 2),
**caractérisée en ce que**
la partie rapportée de moule (1, 2) comprend, pour augmenter la densité de courant dans la zone (5) de l'empreinte par rapport à une zone de raccordement (1b, 2b) de la partie rapportée de moule (1, 2) pour l'application du courant de chauffage, une surface de section transversale réduite, de sorte que dans la zone de l'empreinte par rapport à la zone de raccordement (1b, 2b), une augmentation de la densité de courant peut être obtenue.

7. Partie rapportée de moule selon la revendication 6,
**caractérisée en ce que**
les moyens de passage du courant de chauffage sont des connexions électriques.

8. Partie rapportée de moule selon la revendication 6 ou 7,
**caractérisée en ce que**
celle-ci est formée d'au moins deux éléments de partie rapportée de moule (1, 2) qui forment l'empreinte à l'état assemblé.

9. Partie rapportée de moule selon l'une des revendications 6 à 8,
**caractérisée en ce que**
la partie rapportée de moule (1, 2) comprend des ouvertures (10, 11) destinées au passage d'un milieu réfrigérant.

10. Dispositif de moulage par injection de pièces en matière plastique avec
une partie rapportée de moule (1, 2) qui forme une empreinte, et
une unité d'injection de matière plastique pour l'injection d'une fonte de matière plastique dans l'empreinte,
le dispositif comprenant des moyens destinés à appliquer un courant de chauffage dans la partie rapportée de moule (1, 2) formée au moins partiellement de matériau conducteur,
**caractérisé en ce que**
la partie rapportée de moule (1, 2) est configurée selon l'une des revendications 6 à 9.

11. Dispositif selon la revendication 10,
**caractérisé en ce que**
le dispositif comprend un transformateur de chauffage (56) dont l'enroulement secondaire (55) est relié à la partie rapportée de moule (1, 2) et forme avec celle-ci un circuit de chauffage.

12. Dispositif selon la revendication 10 ou 11,
**caractérisé en ce que**
le dispositif comprend un dispositif d'aspiration de l'air (62, 63) pour l'aspiration de l'air hors de l'empreinte.
